(19) Europäisches Patentamt
European Patent Office
Office européen des brevets

(11) **EP 3 412 756 A1**

(12) **EUROPÄISCHE PATENTANMELDUNG**

(43) Veröffentlichungstag:
**12.12.2018  Patentblatt 2018/50**

(51) Int Cl.:
***C10M 173/00*** (2006.01)    ***C10M 173/02*** (2006.01)

(21) Anmeldenummer: **17174534.2**

(22) Anmeldetag: **06.06.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Rhenus Lub GmbH & Co. KG 41179 Mönchengladbach (DE)**

(72) Erfinder:
• **Demmerling, Anna Lena 41179 Mönchengladbach (DE)**

• **Schlindwein, Hans-Jürgen 41179 Mönchengladbach (DE)**
• **Hediger, Thomas 40721 Hilden (DE)**
• **Quotschalla, Udo 40764 Langenfeld (DE)**

(74) Vertreter: **Cohausz & Florack Patent- & Rechtsanwälte Partnerschaftsgesellschaft mbB Bleichstraße 14 40211 Düsseldorf (DE)**

(54) **KÜHLSCHMIERSTOFF FÜR KOMPOSITMATERIALIEN**

(57)    Die Erfindung betrifft einen im Konzentrat als Emulsion vorliegenden Kühlschmierstoff für die spanende Bearbeitung von Faserverbundkunststoffen und auch zur Bearbeitung von Werkstoffkombinationen aus faserverstärkten Kunststoffen und Metallen sowie einen im Konzentrat als Lösung vorliegenden Kühlschmierstoff für die spanende Bearbeitung von Faserverbundkunststoffen.

Fig. 1

EP 3 412 756 A1

**Beschreibung**

TECHNISCHES GEBIET DER ERFINDUNG

Die Erfindung betrifft Kühlschmierstoffe für die Bearbeitung von Faserverbundkunststoffen sowie Werkstoffkombinationen aus faserverstärkten Kunststoffen und Metallen.

HINTERGRUND DER ERFINDUNG

Der Einsatz von Kühlschmierstoffen bei der Zerspanung ist in der metallbearbeitenden Industrie weit verbreitet. Durch den kühlenden und schmierenden Effekt können nicht nur die Standzeiten der Werkzeuge sondern auch die Oberflächenqualitäten der zerspanten Bauteile erhöht werden. Für die Zerspanung von Faserverbundkunststoffen werden Kühlschmierstoffe bisher nur vereinzelt eingesetzt. Einer Umfrage aus dem Jahr 2014 zufolge führen mehr als 50 % der Anwender die Zerspanung von CFK trocken durch und nur 16 % nutzen die Überflutungskühlschmierung. Aufgrund der sehr kleinen und lungengängigen Partikel sind bei der Trockenzerspanung eine Kapselung des Zerspanungsprozesses und eine Absaugung des FVK-Staubs in der Zerspanungsmaschine notwendig. Delaminationen und herausstehende ungeschnittene Fasern sind bei der Trockenzerspanung häufige Bearbeitungsfehler. Der Werkzeugverschleiß ist durch die starke Abrasivität der harten Fasern hoch, so dass hochpreisige Werkzeuge aus polykristallinem Diamant oder mit speziellen Beschichtungen und Geometrien eingesetzt werden müssen. Ohne diese Werkzeuge ist die spanende Bearbeitung solcher Materialien mit vielen Einschränkungen verbunden.

Grundsätzlich könnte Wasser zur Kühlung der Werkzeuge eingesetzt werden. Das würde aber die Korrosion der verwendeten Werkzeuge, Werkstücke und Maschinen fördern. Wünschenswert ist es aber, auch Materialien wie CFK- und GFK-Verbundmaterialien mit Metall ohne den Einsatz der zuvor genannten spezialisierten Werkzeuge zu bearbeiten. Die besondere Problematik liegt hier in dem Vorhandensein von unterschiedlichen Materialien in dem Verbundmaterial.

Gegenwärtig gibt es in der Branche der Composite-Hersteller und Endbearbeiter noch zahlreiche Vorbehalte gegenüber dem breiten Einsatz von Kühlschmierstoffen für die spanende Bearbeitung von CFK-Verbundwerkstoffen. Diese werden damit begründet, dass insbesondere eine Reaktion mit dem Harz nicht grundsätzlich ausgeschlossen werden kann, wohingegen die Fasern selbst inert und damit reaktionsträge sind. Es wird folglich befürchtet, dass die Schmierstoffkomponenten die Festigkeit des Faserverbundkunststoffs beeinträchtigen oder dass sich Schmierstoffkomponenten in der Matrix des Faserverbundstoffs anreichern und so dessen mechanische Eigenschaften negativ beeinflussen.

Der Erfindung liegt daher die Aufgabe zugrunde, ein Verfahren oder Kühlschmierstoffe bereitzustellen, durch die CFK- und GFK-Materialien einer spanenden Bearbeitung ohne den Einsatz speziell dafür ausgebildeter Werkzeuge unterzogen werden können. Ferner soll ein Kühlschmierstoff bereitgestellt werden, der eine qualitativ hochwertige spanende Bearbeitung auch dann sicherstellt, wenn die faserverstärkten Kunststoffe Metalle enthalten.

ZUSAMMENFASSUNG DER ERFINDUNG

Es ist festgestellt worden, dass ausgewählte Kühlschmierstoff-Zusammensetzungen für die spanende Bearbeitung von Faserverbundkunststoffen und auch Verbundwerkstoffe aus Faserverbundkunststoffen mit jeglicher Art von Metalleinlagen, Metallfüllungen und/oder Metallschichten, nachfolgend Stack genannt, geeignet sind, ohne dass speziell für die spanende Bearbeitung dieser Compositmaterialien entwickelte Werkzeuge verwendet werden.

Gegenstand der Erfindung ist folglich ein Kühlschmierstoff zur spanenden Bearbeitung von Faserverbundkunststoffen und Stacks. Dieser Kühlschmierstoff liegt als Konzentrat in Form einer Emulsion vor. Der Kühlschmierstoff für Faserverbundkunststoffe in Form einer Emulsion umfasst Öl-Komponente, Aminoalkohol, Korrosionsschutzmittel, Emulgator, Entschäumer und Biozid, wobei der Kühlschmierstoff darüber hinaus

(a) einen geschwefelten Kohlenwasserstoff mit 4 bis 30 Kohlenstoffatomen und 1 bis 5 Schwefelatomen und/oder ein geschwefeltes Triglycerid mit 10 bis 20 Kohlenstoffatomen im Fettsäurerest,
(b) ein ethoxyliertes und/oder propoxyliertes Alkylphosphat mit 12 bis 30 Kohlenstoffen im Alkylrest,
(c) einen Phosphorsäureester mit Fettalkoholpolyglykolether,
(d) einen Maleinsäure-Dibutylester, polymerisiert mit $C_{10-20}$-1-Alkenen und
(e) einen epoxydierten Ester

enthält. Die Erfindung bezieht sich auf das Kühlschmierstoffkonzentrat sowie dessen anwendungsfertige wässrige Verdünnungen.

Überraschend wurde festgestellt, dass der zuvor charakterisierte erfindungsgemäße Kühlschmierstoff nicht nur geeignet ist für die Bearbeitung von faserverstärkten Kunststoffen sondern auch von Werkstoffkombinationen aus faserverstärkten Kunststoffen und Metallen.

Gegenstand der Erfindung ist ferner ein Kühlschmierstoff, der im Konzentrat als wässrige Lösung vorliegt und der sich insbesondere zur spanenden Bearbeitung von faserverstärkten Kunststoffen eignet. Dieser Kühlschmierstoff in Form einer wässrigen Lösung umfasst einen oder mehrere Aminoalkohole, Korrosionsschutzmittel, Entschäumer, Biozid und ein Polyethylenoxid-polypropylenoxid-polymer, nachfolgend Polyalkylenglykol genannt. Das Polyalkylenglykol weist eine kinematische Viskosität bei 40 °C von 1.000 bis 5.000 mm$^2$/s nach ASTM D445 auf und hat ein Molekulargewicht von 5.000 bis 9.000 g/mol. Dieser Kühlschmierstoff ist frei oder im Wesentlichen frei von Mineralölen, pflanzlichen Ölen und Fetten.

Die Erfindung bezieht sich auf das wässrige Kühlschmierstoffkonzentrat sowie dessen anwendungsfertige wässrige Lösungen.

Gegenstand der Erfindung ist ferner ein Verfahren zur spanenden Bearbeitung von faserverstärkten Kunststoffen und Werkstoffkombinationen aus faserverstärkten Kunststoffen und Metallen unter Einsatz des erfindungsgemäßen Kühlschmierstoffs.

Die Erfindung bezieht sich darüber hinaus auf die Verwendung des erfindungsgemäßen im Konzentrat als Emulsion vorliegenden Kühlschmierstoffs zur spanenden Bearbeitung von faserverstärkten Kunststoffen und von Werkstoffkombinationen aus faserverstärkten Kunststoffen und Metallen.

Die Erfindung bezieht sich schließlich auf die Verwendung des erfindungsgemäßen im Konzentrat als Lösung vorliegenden Kühlschmierstoffs zur spanenden Bearbeitung von faserverstärkten Kunststoffen.

Durch die erfindungsgemäßen Kühlschmierstoffe wird Bearbeitungswärme abgeführt, ein Schmiereffekt zwischen Werkzeug und Werkstoff vermindert die Reibung und damit Werkzeugverschleiß. Durch die Staubbindung wird das Gesundheitsrisiko verringert. Darüber hinaus können Schnittgeschwindigkeit, Vorschub und Bearbeitungsgüte bei der spanenden Bearbeitung erhöht werden. Der Bauteilausschuss kann verringert werden und die Werkzeugstandzeit erhöht werden. Zusammenfassend können Effizienz und Produktivität sowie der Gesundheitsschutz bei der Zerspanung von faserverstärkten Kunststoffen durch den Einsatz von Kühlschmierstoffen gesteigert werden.

BESCHREIBUNG DER BEVORZUGTEN AUSFÜHRUNGSFORMEN

Der erfindungsgemäße Kühlschmierstoff in Form einer Emulsion ist ein mineralölbasierter EP (extreme pressure)-Kühlschmierstoff ohne Bor und ohne Formaldehyddepot. Er liegt in Form einer Emulsion vor mit einem sehr guten Spülvermögen. Er ist geeignet für die spanende Bearbeitung von faserverstärkten Kunststoffen sowie zur Bearbeitung von Werkstoffkombinationen aus Kunststoffen oder faserverstärkten Kunststoffen mit Aluminium, Stahl und/oder Titan. Der erfindungsgemäße Kühlschmierstoff zeigt in Anwendungskonzentration einen schnellen Schaumzerfall. Er hat eine gute Aluminiumverträglichkeit, zeichnet sich ferner durch gute Hautverträglichkeit und angenehmen Geruch aus.

Der erfindungsgemäße Kühlschmierstoff kann in Form eines Konzentrats die nachfolgend beschriebene Zusammensetzung aufweisen. Der eingesetzte geschwefelte Kohlenwasserstoff weist 4 bis 30 Kohlenstoffatome und 1 bis 5 Schwefelatome auf. Dabei handelt es sich vorzugsweise um Kohlenwasserstoffketten, in denen ein oder mehrere Kohlenstoffatome durch ein oder mehrere Schwefelatome ersetzt sind. Solche geschwefelten Kohlenwasserstoffe, beispielsweise Dialkylpolysulfide mit der zuvor genannten Anzahl an Kohlenstoffatomen, sind auf dem Markt erhältlich. Alternativ oder im Gemisch mit dem zuvor genannten geschwelten Kohlenwasserstoff kann ein geschwefeltes Triglycerid mit 10 bis 20 Kohlenstoffatomen im Fettsäurerest verwendet werden. Dieses schwefelhaltige Additiv kann einen Schwefelgehalt von 10 Gew.-% bis 40 Gew.-% aufweisen. Es können auch verschiedene geschwefelte Kohlenwasserstoffe im Gemisch eingesetzt werden. Der geschwefelte Kohlenwasserstoff kann in einem Anteil von 4 bis 15 Gew.-%, bezogen auf die Masse des Kühlschmierstoffs, eingesetzt werden.

Weiterer wesentlicher Bestandteil des erfindungsgemäßen Kühlschmierstoffs ist ein ethoxyliertes und/oder propoxyliertes Alkylphosphat mit 12 bis 30 Kohlenstoffen im Alkylrest. Dabei handelt es sich um Phosphorsäureester, bei denen mindestens eine Hydroxylgruppe der Phosphorsäure verestert ist. Sie ist verestert mit einem Alkylenoxid, das mindestens eine Ethylenoxideinheit und mindestens eine Propylenoxideinheit und eine Alkylkette umfasst. Solche Verbindungen werden beispielsweise unter der Bezeichnung Fosfodet® von der Kao Chemicals GmbH angeboten. Das ethoxylierte und/oder propoxylierte Alkylphosphat kann in einem Anteil von 0,5 bis 6 Gew.-%, vorzugsweise 2 bis 5 Gew.-%, bezogen auf die Masse des Kühlschmierstoffs, eingesetzt werden.

Weiterer wesentlicher Bestandteil des erfindungsgemäßen Kühlschmierstoffs ist ein ethoxyliertes Alkylphosphat. Dabei kann es sich um gemischte Phosphorsäureester mit Oleylalkoholpolyglykolether handeln. Solche Verbindungen werden beispielsweise von der Clariant Produkte (Deutschland) GmbH unter der Bezeichnung Hordaphos® angeboten. Das ethoxylierte Alkylphosphat kann in dem erfindungsgemäßen Kühlschmierstoff in einem Anteil von 0,5 bis 6 Gew.-%, vorzugsweise 1 bis 4 Gew.-%, bezogen auf die Masse des Kühlschmierstoffs, enthalten sein.

Wesentlicher Bestandteil des erfindungsgemäßen Kühlschmierstoffs ist auch ein Maleinsäure-Dibutylester, polymerisiert mit C$_{10-20}$-1-Alkenen. Stoffe dieser Art werden unter der Bezeichnung Ketjen-Lube® von der Firma Italmatch Chemicals, Italien angeboten. Das Maleinsäure-Dibutylester/C$_{10-20}$-1-Alken-Copolymer kann in einem Anteil von 2 bis 6 Gew.-%, vorzugsweise 3 bis 5 Gew.-%, bezogen auf die Masse des Kühlschmierstoffs, enthalten sein.

Schließlich ist ein epoxydierter Ester als wesentlicher Bestandteil des erfindungsgemäßen Kühlschmierstoffs enthalten. Geeignete epoxydierte Ester sind vorzugsweise epoxydierte Triglyceride, wobei die Fettsäuren vorzugsweise 14 bis 20 Kohlenstoffatome aufweisen. Erfindungsgemäß geeignete epoxydierte Triglyceride sind beispielsweise solche, die unter der Bezeichnung Edenol® von der Emery Oleochemicals GmbH angeboten werden. Der epoxydierte Ester kann in einem Anteil von 1 bis 6 Gew.-%, vorzugsweise 2 bis 3 Gew.-%, bezogen auf die Masse des Kühlschmierstoffs, enthalten sein. Die expoxydierten Ester wirken als Mercaptanfänger.

Darüber hinaus kann das Kühlschmierstoffkonzentrat 5 bis 20 Gew.-% Wasser enthalten. Das Konzentrat ist eine Wasser-in-Öl-Emulsion. Es ist mit Wasser mischbar. Zur Anwendung wird das Kühlschmierstoffkonzentrat mit Wasser verdünnt. Nach Verdünnung mit Wasser liegt eine Öl-in-Wasser-Emulsion vor.

Neben den zuvor genannten Bestandteilen weist der erfindungsgemäße Kühlschmierstoff weitere Bestandteile auf. Dabei handelt es sich um häufig in Kühlschmierstoffen verwendete Komponenten wie eine Öl-Komponente, Aminoalkohol, Korrosionsschutzmittel, Emulgator, Entschäumer und Biozide.

Als Aminoalkohol können Mono-, Di und Trialkanolamine sowie deren Gemische eingesetzt werden und weitere Alkanolamine. Weitere Alkanolamine sind insbesondere Aminooctanol, Dibutylethanolamin, Diclyclohexylamin und deren Gemische. Letztere können auch im Gemisch mit Mono-, Di und Trialkanolaminen eingesetzt werden. Aminoalkohole bilden mit Säuren im Kühlschmierstoff Puffergemische. Aminoalkohole können eingesetzt werden als zum Beispiel Monoisopropanolamine, Methyldiethanolamine oder Triethanolamin und deren Gemische. Sie können im Kühlschmierstoffkonzentrat in einer Menge von 10 bis 25 Gew.-%, bezogen auf die Masse des Kühlschmierstoffs, enthalten sein.

Der Anteil des Korrosionsschutzmittels kann 5 bis 20 Gew.-%, bezogen auf die Masse des Kühlschmierstoffkonzentrats, betragen. Als in Kühlschmierstoffen übliche Korrosionsschutzmittel können Mono-, Di- und Tricarbonsäuren, Triazolderivate (Benzotriazol), native und synthetische Natriumpetroleumsulfonate oder Fettsäureamide verwendet werden.

Stabilisatoren oder Biozide können in einem Anteil von 0,1 bis 20 Gew.-%, bezogen auf die Masse des Kühlschmierstoffkonzentrats, verwendet werden. Geeignete Stabilisatoren sind beispielsweise Phenoxyethanol, Phenoxypropanol, Isothiazolinone (z.B. Benzisothiazolinone, Butylbenzisothiazolinone) Iodcarbamat, Natriumpyridinthion, o-Phenylphenol.

Als Schmieröle können pflanzliche Öle, tierische Öle, mineralische Öle und synthetische Öle verwendet werden. Der Anteil des Schmieröls kann 5 bis 40 Gew.-% betragen, bezogen auf die Masse des Kühlschmierstoffkonzentrats.

Emulgatoren können in einem Anteil von 10 bis 30 Gew.-%, bezogen auf die Masse des Kühlschmierstoffkonzentrats, verwendet werden.

Zur Herstellung des anwendungsfertigen Kühlschmierstoffs kann vorzugsweise das Wasser vorgelegt und anschließend das Kühlschmierstoffkonzentrat in Form einer Emulsion unter Rühren hinzugegeben werden. Es können Standard-Kühlschmierstoff-Mischgeräte eingesetzt werden wie Venturimischer oder Dosierpumpen.

Der Kühlschmierstoff in Form einer wässrigen Lösung ist frei oder ist im Wesentlichen frei von einem üblichen Schmiermittel. Übliche Schmiermittel sind beispielsweise pflanzliche Öle und Fette, tierische Öle und Fette, mineralische Öle und synthetische Öle. Im Wesentlichen frei von einem üblichen Schmiermittel bedeutet, dass der Gehalt an üblichem Schmiermittel im Kühlschmierstoffkonzentrat kleiner als 2 Gew.-%, vorzugsweise kleiner als 1 Gew.-% und besonders bevorzugt kleiner als 0,5 Gew.-%, bezogen auf die Masse des Kühlschmierstoffkonzentrats, ist.

Die Additive Aminoalkohol/e (Alkanolamin), Korrosionsschutzmittel, Entschäumer und Biozid können in dem wasserlöslichen Kühlschmierstoffkonzentrat dieselben sein wie bei dem erfindungsgemäßen Kühlschmierstoff, der als Konzentrat in einer Emulsion vorliegt.

Wesentlicher Bestandteil des erfindungsgemäßen wasserlöslichen Kühlschmierstoffs ist ein wasserlösliches Polyethylenoxid-polypropylenoxid-polymer mit einer kinematischen Viskosität bei 40 °C von 1.000 bis 5.000 mm$^2$/s nach ASTM D445 und einem Molekulargewicht von 5.000 bis 9.000 g/mol. Vorzugsweise beträgt die kinematische Viskosität des Polyalkylenglykols bei 40 °C von 1.500 bis 3.000 mm$^2$/s nach ASTM D445. Vorzugsweise beträgt das Molekulargewicht des Polyalkylenglkols 6.000 bis 8.000 g/mol.

Die Konzentration des wasserlöslichen Polyalkylenglykols im wässrigen Kühlschmierstoff kann 10 bis 30 Gew.-%, bezogen auf die Masse des Kühlschmierstoffkonzentrats, betragen. Sie beträgt vorzugsweise 10 bis 20 Gew.-%.

Gemäß einer weiteren bevorzugten Ausführungsform der Erfindung kann der wasserlösliche Kühlschmierstoff ein Phosphor-Additiv in Form von Phosphorsäure, deren Aminoalkoholsalze oder eine andere als Phosphoradditiv übliche Phosphorsäureverbindung enthalten. Die Konzentration der Phosphorsäure im wässrigen Kühlschmierstoff kann 0,1 bis 4 Gew.-%, bezogen auf die Masse des Kühlschmierstoffkonzentrats, betragen. Sie beträgt vorzugsweise 0,5 bis 2 Gew.-%.

Korrosionsschutzmittel können beispielsweise in einer Menge von 1,5 bis 6 Gew.-%, bezogen auf die Masse des Kühlschmierstoffkonzentrats, enthalten sein. Dabei handelt es sich vorzugsweise um Säureverbindungen, die unter der Bezeichnung Irgacor angeboten werden. Vorzugsweise werden jedoch weitere Korrosionsschutzmittel verwendet wie Sebazinsäure und Isononansäure. Sebazinsäure kann in einer Konzentration von 2 bis 4 Gew.-%, vorzugsweise etwa 3 Gew.-%, bezogen auf die Masse des Kühlschmierstoffkonzentrats, eingesetzt werden. Isononansäure kann in einer Menge von 3 bis 8 Gew.-%, vorzugsweise etwa 5 Gew.-%, bezogen auf die Masse des Kühlschmierstoffkonzentrats verwendet werden. Ferner kann zusätzlich eine Triazolverbindung als Korrosionsschutzmittel verwendet werden. Triazole, beispielsweise Benzotriazol können in einer Menge von 0,2 bis 1 Gew.-%, bezogen auf die Masse des Kühlschmierstoffkonzentrats, verwendet werden.

Das Kühlschmierstoffkonzentrat enthält als Alkanolamine vorzugsweise Monoethanolamin und Triethanolamin. Monoethanolamin kann in einer Menge von 3 bis 10 Gew.-%, vorzugsweise 5 bis 8 Gew.-%, jeweils bezogen auf die Masse des Kühlschmierstoffkonzentrats, eingesetzt werden. Triethanolamin kann in einer Menge von 2 bis 40 Gew.-%, vorzugsweise 20 bis 35 Gew.-%, jeweils bezogen auf die Masse des Kühlschmierstoffkonzentrats, verwendet werden.

Ferner sind Biozide in dem Kühlschmierstoffkonzentrat vorhanden. Vorzugsweise werden Jodcarbamat und Jodcarbamatverbindungen und Isothiazolinone verwendet. Diese werden in üblichen Konzentrationen im Kühlschmierstoffkonzentrat eingesetzt. Möglich ist ferner der Einsatz eines Entschäumers im Kühlschmierstoffkonzentrat.

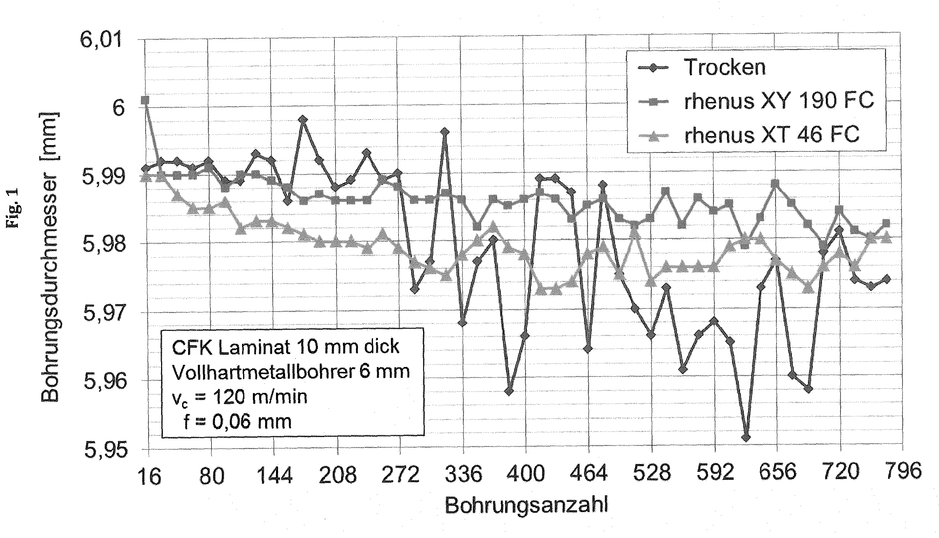

**Fig. 1** zeigt die Ergebnisse von Bestimmungen des Bohrungsdurchmessers bei einem Carbonfaserkunststofflaminat einer Dicke von 10 mm mit zunehmender Bohrungsanzahl zum Vergleich mit dem Ergebnis einer trockenen Bearbeitung und bei Anwendung eines erfindungsgemäßen Kühlschmierstoffs in Form einer Emulsion (rhenus XT 46 FC) sowie eines erfindungsgemäßen Kühlschmierstoffs in Form einer Lösung(rhenus XY 190 FC) als Vergleich.

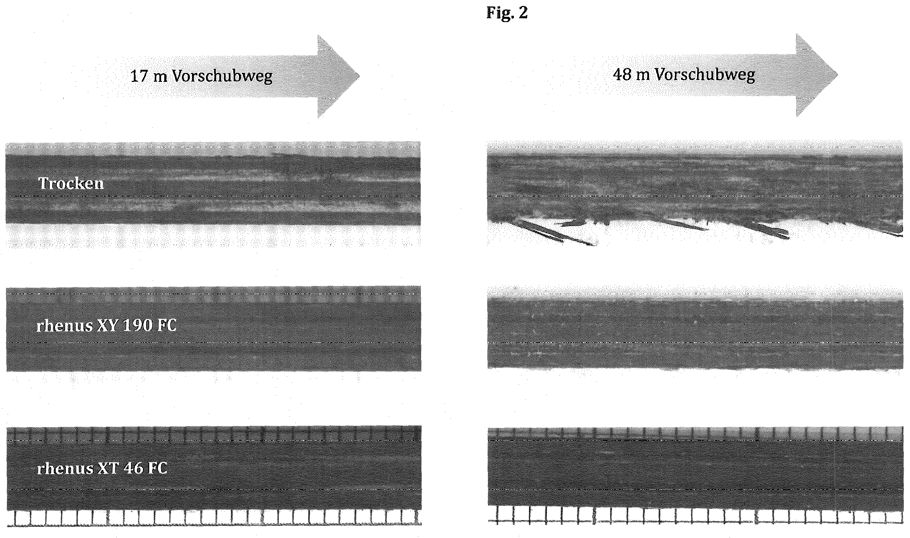

**Fig. 2** zeigt die Bearbeitungsqualität beim Fräsen von Carbonfaserkunststofflaminat mit einer Dicke von 10 mm nach 17 Metern und nach 48 Metern Vorschubweg bei trockener Bearbeitung und bei Anwendung eines erfindungsgemäßen Kühlschmierstoffs in Form einer Emulsion (rhenus XT 46 FC) und eines Kühlschmierstoffs in Form einer Lösung (rhenus XY 190 FC).

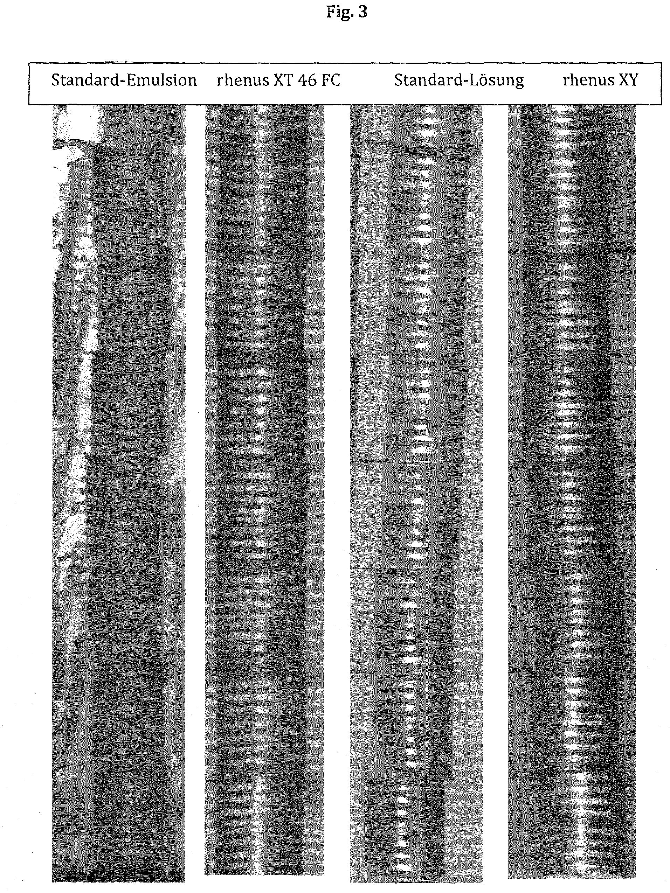

**Fig. 3** zeigt Bohrungswandungen in Prüfkörpern, in denen die Bohrungen unter Einsatz der erfindungsgemäßen Kühlschmierstoffe und unter Einsatz von Standardvergleichskühlschmierstoffen (Emulsion und Lösung) für die Bearbeitung von Stahl und Aluminium vorgenommen worden sind. Die Bohrwandungen zeigen, dass die erfindungsgemäßen Kühlschmierstoffe zur Bearbeitung von Faserverbundstoffen besonders gut geeignet sind.

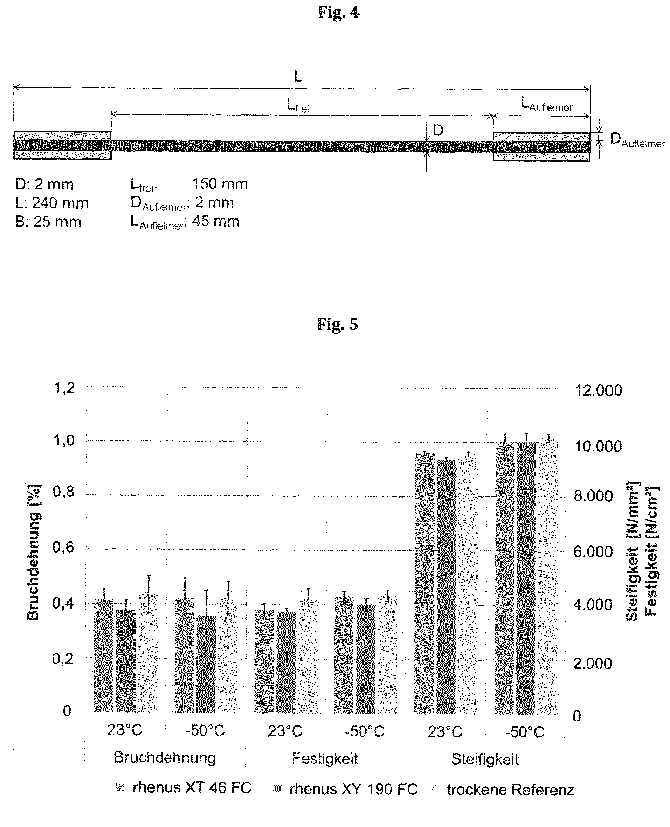

**Fig. 4** zeigt die Geometrie einer Querzugprobe nach DIN EN 2561.

**Fig. 5** zeigt Werkstoffkennwerte der konditionierten Querzugproben (Einlagerung in 10 %igem Kühlschmierstoff, 1 Woche, 60 °C).

Die Erfindung wird durch die folgenden Beispiele weiter erläutert.

Beispiel 1 - Zusammensetzung Kühlschmierstoff (Emulsion)

Ein möglicher erfindungsgemäßer Kühlschmierstoff hat als Konzentrat die in der Tabelle angegebene Zusammensetzung. Unter kräftigem Rühren werden die nachfolgend angegebenen Substanzen miteinander vermischt. Die Zahlenangaben bedeuten Gew.-% und beziehen sich auf die Masse des Kühlschmierstoffkonzentrats. Dieser liegt als Emulsion vor.

| | |
|---|---|
| Wasser | 11,42 |
| Monoisopropanolamin | 2 |
| Methyldiethanolamin | 10 |
| Triethanolamin rein 90% | 9,7 |
| Benzotriazol (Korrosionsschutz) | 0,9 |
| Irgacor® L 190 - 85 (Korrosionsschutz) | 2,1 |
| Mineralöl | 6 |
| Phenoxyethanol | 10 |
| SNS 520 (Korrosionschutz) | 5 |
| TPS-20 (Dialkylsulfid) | 4 |

(fortgesetzt)

| | |
|---|---|
| TPS 32 (Dialkylsulfid) | 8 |
| Edenol® D 81 (epoxidierter Ester) | 4 |
| Lubrophos® LB 400E ALL (Phosphorsäurester) | 2 |
| Diacid® 1550 (Korrosionsschutz) | 3 |
| Fosfodet® RS 0602 (Alkylphosphat) | 4 |
| AC 101 (Korrosionsschutz) | 4 |
| Emulgator | 9 |
| Maleinsäuredibutylester | 4 |
| Benzisothiazolinon | 0,49 |
| Butylbenzisothiazolinon | 0,09 |
| Entschäumer | 0,3 |

Zur Anwendung wird das Konzentrat mit Wasser im Gewichtsverhältnis 1:9 verdünnt.

Beispiel 2 - Zusammensetzung Kühlschmierstoff (Lösung)

Ein möglicher erfindungsgemäßer wasserlöslicher Kühlschmierstoff hat als Konzentrat die in der Tabelle angegebene Zusammensetzung. Unter kräftigem Rühren werden die nachfolgend angegebenen Substanzen miteinander vermischt. Die Zahlenangaben bedeuten Gew.-% und beziehen sich auf die Masse des Kühlschmierstoffkonzentrats.

| | |
|---|---|
| Wasser | 34,11 |
| Irgacor® L 190 - 85 (Korrosionsschutz) | 4 |
| Monoethanolamin | 6,9 |
| Triethanolamin | 30 |
| Sebazinsäure (Korrosionsschutz) | 3 |
| Isononansäure (Korrosionsschutz) | 5 |
| Tolyltriazol | 0,7 |
| BREOX 75 W 2050 (PAG) | 15 |
| Entschäumer | 0,2 |
| Jodcarbamat | 0,6 |
| Benzisothiazolinon | 0,49 |

Zur Anwendung wird das Konzentrat mit Wasser im Gewichtsverhältnis 1:9 verdünnt.

Beispiel 3 - Prüfen der Bearbeitungsqualität beim Bohren

Es wurde die Bearbeitungsqualität beim Bohren in eine 10 mm dicke Carbonfaserkunststoffplatte ohne Kühlschmierstoff und unter Einsatz des erfindungsgemäßen Kühlschmierstoffs, in Fig. 1 bezeichnet als rhenus XT 46 FC (Beispiel 1), und mit einem vollständig wasserlöslichen Kühlschmierstoff, in Fig. 1 bezeichnet als rhenus XY 190 FC geprüft. Für jede der drei Versuchsreihen wurde ein neuer Vollhartmetallbohrer mit einem Durchmesser von 6 mm eingesetzt. Die Schnittgeschwindigkeit $V_c$ betrug 120 m/min. Es wurden mehr als 720 Bohrungen mit jedem Bohrer durchgeführt und der Durchmesser der Bohrlöcher bestimmt. Das Diagramm der Fig. 1 zeigt, dass der Bohrlochdurchmesser im Falle der trockenen ungeschmierten Bohrungen mit zunehmender Bohrlochanzahl immer stärker schwankt. Diese Schwankungen des Bohrlochdurchmessers sind deutlich stärker als im Falle der geschmierten Bohrungen.

Beispiel 4 - Prüfen der Bearbeitungsqualität beim Fräsen

Es wurde die Bearbeitungsqualität beim Fräsen einer Carbonfaserkunststoffplatte mit einer Dicke von 4 mm geprüft. Für jeden Versuch wurde ein neues Werkzeug aus Vollhartmetall und ein neues Werkstück derselben Charge verwendet. Die Kanten der Werkstücke (CFK-Platte) wurden mit der gleichen Zustellung, dem gleichen Vorschub und der gleichen Drehzahl bearbeitet. Dabei wurde unter Berücksichtigung der folgenden Parameter gearbeitet:

- Plattendicke: CFK, 4 mm
- Werkzeug: Gühring VHM-Fräser, z = 2, Ø 6mm, (302958832 WN R-CR1 6,0-13,0 K/P16073262)
- Schnittwerte: Schnittgeschwindigkeit $v_c$ = 190 m/min, Vorschub $f_z$ = 0,06 mm, Zustellung $a_e$ = 1,0 mm
- Abbruchkriterium: Max. Verschleißmarkenbreite $VB_{max}$ = 0,2 mm oder max. Vorschubweg $L_F$ = 48m.

Eine visuelle Bewertung erfolgte jeweils nach 17 Metern und nach 48 Metern Vorschubweg. Bewertet wurde dabei das Fräsen ohne Kühlschmierstoff, mit dem erfindungsgemäßen Kühlschmierstoff, in Fig. 2 bezeichnet als rhenus XT 46 FC (Beispiel 1), und mit einem vollständig wasserlöslichen Kühlschmierstoff, in Fig. 2 bezeichnet als rhenus XY 190 FC. Die Fotografien der Fräskanten zeigen, dass die Bearbeitung der Carbonfaserkunststoffplatte mit dem erfindungsgemäßen Kühlschmierstoff rhenus XT 46 FC die deutlich glattere Fräskante nach 48 Metern Vorschubweg im Vergleich zur Trockenbearbeitung zeigt.

Beispiel 5 - Industrieller Feldtest mit rhenus XT 46 FC aus Beispiel 1

| Werkzeug | Schnittdaten ohne KSS | Schnittdaten mit KSS | Ohne KSS | Mit KSS |
|---|---|---|---|---|
| VHM-Fräser, pyramidverzahnt, Ø6 | 8.500 1/min 1.200 mm/min | 13.500 1/min 2.000 mm/min | 6 Teile = 42 m | 40 Teile = 150 m |
| VHM-Fräser, Ø4,8 | 7.600 1/min 700 mm/min | 7.600 1/min 700 mm/min | 10 Teile = 1,7 m | 40 Teile =6,8 m |

Folgende Vorteile der erfindungsgemäßen Kühlschmierstoffe lassen sich darstellen:

- Weniger Delamination und dadurch weniger Nachbearbeitung notwendig
- Geringerer Werkzeugverschleiß und dadurch geringere Werkzeugkosten
- Höhere Schnittwerte und dadurch geringere Fertigungszeiten
- Geringere Fertigungskosten
- Sehr gute Spülwirkung
- Sauberer Maschinenraum
- Staubbindung

Beispiel 6 - Querzugversuche zur Prüfung des Faser-Matrix-Verbundes

In Querzugversuchen nach DIN EN 2561 wird die Zugkraft orthogonal zur Faserrichtung in die Probe eingeleitet und kontinuierlich bis zum Bruch der Probe gesteigert. So wird nicht die Festigkeit der Faser getestet, sondern der Zusammenhalt von Faser und Matrix. Die Geometrie einer Querzugprobe ist schematisch in Fig.4 dargestellt.
Mit den Messwerten der Kraft F und der Dehnung $\varepsilon$ und dem bekannten, beanspruchten Probenquerschnitt S werden Festigkeit $\sigma$ und Steifigkeit E ermittelt:

$$\text{Querzugfestigkeit [MPa]} \quad \sigma = \frac{F}{S}$$

$$\text{Querzugsteifigkeit [MPa]} \quad E = \frac{F_{0,5} - F_{0,1}}{S \cdot (\varepsilon_{0,5} - \varepsilon_{0,1})}$$

Dabei stehen die Indizes 0,1 bzw. 0,5 für die Kraftmesswerte bei 10 % bzw. 50 % der Bruchlast.

Die Querzugversuche wurden an einer Zwick-Prüfmaschine (Typ: 1476 und 1484) bei Raumtemperatur und in einem Klimaschrank bei - 50 °C durchgeführt. Die gemittelten Werkstoffkennwerte basieren auf mindestens sechs Einzelmessungen und sind in Fig. 5 wiedergegeben.

Aus dem Balkendiagramm geht hervor, dass sich die Werkstoffkennwerte der mit KSS behandelten Proben von denen der trocken behandelten Proben unterscheiden. Tendenziell liegen die Werkstoffkennwerte mit Kühlschmierstoff (KSS) unterhalb der Referenz. Um zu beurteilen, ob diese Unterschiede charakteristisch oder zufällig sind, wurde die Signifikanz mit einer Fehlerwahrscheinlichkeit von 1 % analysiert. Dazu wurde ein zweiseitiger Student-t-Test unter Annahme gleicher Varianzen durchgeführt und das Niveau berechnet, bei dem die Mittelwerte gerade signifikant unterschiedlich sind. Liegen die berechneten P-Werte oberhalb der Fehlerwahrscheinlichkeit, unterscheiden sich die Mittelwerte nicht signifikant. Die ermittelten Differenzen treten dann statistisch zufällig auf. Die Ergebnisse und Schlussfolgerungen der einzelnen Prüfungen sind in Tabelle 1 zusammengefasst.

Tabelle 1: Signifikanzanalyse der Messwerte mit einer Fehlerwahrscheinlichkeit von 0,01

| Kennwert | Temperatur | KSS (10 %ig) | p-Wert | Mittelwerte unterscheiden sich ... |
|---|---|---|---|---|
| Bruchdehnung | 23 °C | rhenus XT 46 FC | 0,5913 | nicht signifikant |
| | | rhenus XY 190 FC | 0,1175 | nicht signifikant |
| | -50 °C | rhenus XT 46 FC | 0,9918 | nicht signifikant |
| | | rhenus XY 190 FC | 0,1909 | nicht signifikant |
| Festigkeit | 23 °C | rhenus XT 46 FC | 0,0729 | nicht signifikant |
| | | rhenus XY 190 FC | 0,283 | nicht signifikant |
| | -50 °C | rhenus XT 46 FC | 0,6965 | nicht signifikant |
| | | rhenus XY 190 FC | 0,0263 | nicht signifikant |
| Steifigkeit | 23 °C | rhenus XT 46 FC | 0,6251 | nicht signifikant |
| | | rhenus XY 190 FC | 0,0004 | signifikant (-2,4 %) |
| | -50 °C | rhenus XT 46 FC | 0,2780 | nicht signifikant |
| | | rhenus XY 190 FC | 0,1962 | nicht signifikant |

Die in rhenus XT 46 FC eingelagerten Proben zeigen sowohl bei 23 °C als auch bei - 50 °C keine Auffälligkeiten bei den ermittelten Werkstoffkennwerten. Die Änderungen der Messwerte sind bei rhenus XT 46 FC unter Berücksichtigung einer 99 %igen Sicherheitswahrscheinlichkeit nicht signifikant. Bei rhenus XY 190 FC unterscheiden sich die Werkstoffkennwerte bei -50 °C im Vergleich zur Referenzprobe ebenfalls nicht. Die Querzugsteifigkeit bei 23 °C verringert sich bei rhenus XY 190 FC um 2,4 %. Die Querzugbruchdehnung und -festigkeit bei 23 °C zeigen durch eine Lagerung in rhenus XY 190 FC keine signifikanten Änderungen. Damit schneidet rhenus XT 46 FC im Querzugversuch etwas besser ab als rhenus XY 190 FC. Als mögliche Ursache für die Steifigkeitsabnahme bei 23 °C wurde das begünstigte Eindiffundieren von rhenus XY 190 FC in den Verbundwerkstoff diskutiert und mittels Fluoreszenzmikroskopie untersucht. Dazu wurden die Kühlschmierstoffe vor der Einlagerung mit einem Fluoreszenzmarker versetzt und die CFK-Proben nach der Einlagerung unter einem Fluoreszenzmikroskop mit 10facher Vergrößerung untersucht. Ein Nachweis über ein Eindringen des Kühlschmierstoffs in die Matrix konnte dabei nicht erbracht werden.

Angesichts der extremen Testbedingungen (10 %iger KSS, 1 Woche Einwirkzeit bei 60 °C) kann davon ausgegangen werden, dass bei einem reellen Einsatz der getesteten KSS in der Produktion keine signifikanten Änderungen der Querzugbruchdehnung, Querzugfestigkeit und Querzugsteifigkeit im Vergleich zur Trockenzerspanung ermittelt werden. Eine Nasszerspanung von Epoxidharz basiertem CFK mit rhenus XT 46 FC oder rhenus XY 190 FC ist somit unkritisch.

**Patentansprüche**

**1.** Kühlschmierstoff für die Bearbeitung von Faserverbundkunststoffen mit Öl-Komponente, Alkanolamin, Korrosionsschutzmittel, Emulgator, Entschäumer und Biozid, **dadurch gekennzeichnet, dass** der Kühlschmierstoff

(a) einen geschwefelten Kohlenwasserstoff mit 4 bis 30 Kohlenstoffatomen und 1 bis 5 Schwefelatomen und/oder ein geschwefeltes Triglycerid mit 10 bis 20 Kohlenstoffatomen im Fettsäurerest,

(b) ein ethoxyliertes und/oder propoxyliertes Alkylphosphat mit 12 bis 30 Kohlenstoffen im Alkylrest,

(c) einen Phosphorsäureester mit Fettalkoholpolyglykolether,

(d) einen Maleinsäure-Dibutylester, polymerisiert mit $C_{10-20}$-1-Alkenen, und

(e) einen epoxydierten Ester

enthält.

**2.** Kühlschmierstoff nach Anspruch 1, **dadurch gekennzeichnet, dass** der geschwefelte Kohlenwasserstoff im Kühlschmierstoff in einem Anteil von 4 Gew.-% bis 15 Gew.-%, bezogen auf die Masse des Kühlschmierstoffs, enthalten ist.

**3.** Kühlschmierstoff nach Anspruch 1, **dadurch gekennzeichnet, dass** das ethoxylierte und/oder propoxylierte Alkylphosphat im Kühlschmierstoff in einem Anteil von 0,5 Gew.-% bis 6 Gew.-%, bezogen auf die Masse des Kühlschmierstoffs, enthalten ist.

**4.** Kühlschmierstoff nach Anspruch 1, **dadurch gekennzeichnet, dass** der Ester aus Phosphorsäure und ethoxyliertem und propoxyliertem Alkohol im Kühlschmierstoff in einem Anteil von 0,5 Gew.-% bis 6 Gew.-%, bezogen auf die Masse des Kühlschmierstoffs, enthalten ist.

**5.** Kühlschmierstoff nach Anspruch 1, **dadurch gekennzeichnet, dass** das Polymerisat aus Maleinsäure-Dibutylester und $C_{10-20}$-1-Alkenen in einem Anteil von 2 bis 6 Gew.-%, bezogen auf die Masse des Kühlschmierstoffs, enthalten ist.

**6.** Kühlschmierstoff nach Anspruch 1, **dadurch gekennzeichnet, dass** das ein epoxydiertes Triglycerid in einem Anteil von 1 bis 6 Gew-%, bezogen auf die Masse des Kühlschmierstoffs, enthalten ist.

**7.** Kühlschmierstoff nach einem der Ansprüche 1 bis 6, **dadurch gekennzeichnet, dass** der Kühlschmierstoff einen nichtionischen und einen anionischen Emulgator enthält

**8.** Kühlschmierstoff nach einem der Ansprüche 1 bis 7, **dadurch gekennzeichnet, dass** der Kühlschmierstoff Phenoxyethanol als Biozid enthält.

**9.** Verwendung des Kühlschmierstoffs nach einem der Ansprüche 1 bis 8 zur spanenden Bearbeitung von Faserverbundkunststoffen und Werkstoffkombinationen aus faserverstärkten Kunststoffen und Metallen.

**10.** Wässriger Kühlschmierstoff, enthaltend einen oder mehrere Alkanolamin, Korrosionsschutzmittel, Entschäumer, Biozid, **dadurch gekennzeichnet, dass** der Kühlschmierstoff ein wasserlösliches Polyethylenoxid-polypropylenoxid-polymer mit einer kinematischen Viskosität bei 40 °C von 1.000 bis 5.000 mm$^2$/s nach ASTM D445 und einem Molekulargewicht 5.000-9.000g/mol.

**11.** Wässriger Kühlschmierstoff nach Anspruch 10, **dadurch gekennzeichnet, dass** das Kühlschmierstoffkonzentrat und der anwendungsfertige verdünnte Kühlschmierstoff frei im Wesentlichen frei von pflanzlichen Ölen und Fetten, tierischen Ölen und Fetten und mineralischen Ölen und synthetische Ölen ist.

**12.** Wässriger Kühlschmierstoff nach Anspruch 10, **dadurch gekennzeichnet, dass** ein Phosphor-Additiv in Form von Phosphorsäure oder deren Aminoalkoholsalze darin enthalten ist.

**13.** Verwendung des wässrigen Kühlschmierstoffs nach einem der Ansprüche 10 bis 12 zur spanenden Bearbeitung von Faserverbundkunststoffen.

**Fig. 1**

Bohrungsdurchmesser [mm]

CFK Laminat 10 mm dick
Vollhartmetallbohrer 6 mm
$v_c$ = 120 m/min
f = 0,06 mm

Bohrungsanzahl

— Trocken
— rhenus XY 190 FC
— rhenus XT 46 FC

Fig. 2

17 m Vorschubweg

48 m Vorschubweg

Trocken

rhenus XY 190 FC

rhenus XT 46 FC

Fig. 3

| Standard-Emulsion | rhenus XT 46 FC | Standard-Lösung | rhenus XY |
|---|---|---|---|

## Fig. 4

D: 2 mm  $L_{frei}$: 150 mm
L: 240 mm  $D_{Aufleimer}$: 2 mm
B: 25 mm  $L_{Aufleimer}$: 45 mm

## Fig. 5

**EUROPÄISCHER RECHERCHENBERICHT**

Nummer der Anmeldung

EP 17 17 4534

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 2015 086332 A (YUSHIRO CHEM IND) 7. Mai 2015 (2015-05-07) * das ganze Dokument * ----- | 1-13 | INV. C10M173/00 C10M173/02 |
| A | DE 10 2008 011781 A1 (CARL BECHEM GMBH [DE]) 3. September 2009 (2009-09-03) * das ganze Dokument * ----- | 1-13 | |
| A | EP 3 124 583 A1 (IDEMITSU KOSAN CO [JP]) 1. Februar 2017 (2017-02-01) * das ganze Dokument * ----- | 1-13 | |
| A | US 5 706 684 A (GONG DELI [US] ET AL) 13. Januar 1998 (1998-01-13) * das ganze Dokument * ----- | 1-13 | |
| A | Cognis: "Breox Product Range", , 1. Januar 2006 (2006-01-01), XP002776491, Gefunden im Internet: URL:http://www.ilco-chemie.de/downloads/05_Breox.pdf [gefunden am 2017-12-07] * das ganze Dokument * ----- | 10-13 | RECHERCHIERTE SACHGEBIETE (IPC) C10M C10N |
| A | US 2017/009175 A1 (ANDERSON STEVEN [GB] ET AL) 12. Januar 2017 (2017-01-12) * das ganze Dokument * ----- | 1-13 | |

Der vorliegende Recherchenbericht wurde für alle Patentansprüche erstellt

| Recherchenort | Abschlußdatum der Recherche | Prüfer |
|---|---|---|
| München | 8. Dezember 2017 | Elflein, Eleonore |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 4534

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2017

| Im Recherchenbericht angeführtes Patentdokument | Datum der Veröffentlichung | Mitglied(er) der Patentfamilie | Datum der Veröffentlichung |
|---|---|---|---|
| JP 2015086332 A | 07-05-2015 | KEINE | |
| DE 102008011781 A1 | 03-09-2009 | DE 102008011781 A1<br>DE 202009018507 U1<br>EP 2250244 A1<br>WO 2009106359 A1 | 03-09-2009<br>06-12-2011<br>17-11-2010<br>03-09-2009 |
| EP 3124583 A1 | 01-02-2017 | CN 106459823 A<br>EP 3124583 A1<br>JP 2015189954 A<br>KR 20160137981 A<br>TW 201540825 A<br>US 2017175030 A1<br>WO 2015146908 A1 | 22-02-2017<br>01-02-2017<br>02-11-2015<br>02-12-2016<br>01-11-2015<br>22-06-2017<br>01-10-2015 |
| US 5706684 A | 13-01-1998 | AU 696771 B2<br>BR 9606678 A<br>CA 2204036 A1<br>EP 0794996 A1<br>US 5706684 A<br>WO 9712951 A1 | 17-09-1998<br>21-10-1997<br>10-04-1997<br>17-09-1997<br>13-01-1998<br>10-04-1997 |
| US 2017009175 A1 | 12-01-2017 | BR 102015020543 A2<br>CA 2900053 A1<br>CN 106337185 A<br>JP 2017014611 A<br>KR 20170005742 A<br>US 2017009175 A1 | 24-01-2017<br>06-01-2017<br>18-01-2017<br>19-01-2017<br>16-01-2017<br>12-01-2017 |

EPO FORM P0461

Für nähere Einzelheiten zu diesem Anhang : siehe Amtsblatt des Europäischen Patentamts, Nr.12/82